# EUROPEAN PATENT SPECIFICATION

(11) **EP 2 832 919 B1**
(45) Date of publication and mention of the grant of the patent: **21.03.2018**
(21) Application number: 13767335.6
(22) Date of filing: 31.01.2013
(51) Int. Cl.: D06F 58/00, D06F 58/28, B01D 53/26, F24F 3/14, F24F 11/00, F26B 9/02, F26B 21/00, F26B 21/02, F26B 21/08, F26B 21/10, F26B 25/22

(54) **DEHUMIDIFIER**
ENTFEUCHTER
DÉSHUMIDIFICATEUR

(30) Priority: 27.03.2012 JP 2012070910
(43) Date of publication of application: 04.02.2015
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: SHIBATA, Hideo, Saitama, 369-1295 (JP); KABETA, Noriyoshi, Tokyo 102-0073 (JP); ARAI, Satoshi, Tokyo 102-0073 (JP); FUJITA, Yoshiyuki, Saitama, 369-1295 (JP); NISHIDA, Yuka, Saitama, 369-1295 (JP)
(74) Representative: Pfenning, Meinig & Partner mbB
(86) International application number: PCT/JP2013/052238
(87) International publication number: WO 2013/145848

(56) References cited:
- EP-A1- 2 813 775
- WO-A1-2011/111515
- JP-A- 2004 226 050
- JP-A- 2007 240 100
- JP-A- 2009 089 995
- JP-A- 2009 131 786
- JP-A- 2009 183 338
- JP-A- 2009 219 582
- JP-A- 2010 069 286
- JP-A- 2011 190 980
- US-A1- 2011 047 812

## Description

### Technical Field

The present invention relates to a dehumidifier which removes the moisture in a room, and in particular to a dehumidifier having a function of drying laundry which are objects hung in a room to be dried.

### Background Art

There is a conventional dehumidifier in which control means makes a comparison between temperature detection results obtained by infrared detection means and room atmosphere temperature detection results obtained by temperature detection means, whereby a sensible heat decrease due to the evaporation of the moisture absorbed by objects to be dried is recognized and the location where there is a temperature distribution with temperatures lower than the room temperature due to sensible heat decrease is determined to be the placement range of the objects to be dried (refer to Patent Literature 1, for example).

### Citation List

### Patent Literature

Patent Literature 1: Japanese Patent Laid-Open No. 2007-240100 (pages 2 to 4, Figures 3 to 5)

WO 2011/111515 A1 discloses a dehumidifier capable of identifying the arrangement range of an object to be dried. For this purpose, the dehumidifier includes a dehumidifying means 5 which remove moisture contained in the room air; a blowing fan 2 that draws in the room air and blows out dry air; a wind direction changing means which changes the blowing direction of the dry air; an infrared ray sensor which detects the surface temperature of the object in a non-contact state; and a control circuit that detects the dried state of the object from the surface temperature detected by the infrared ray sensor 6, and controls the wind direction changing means 1 according to the dried state thereof.

JP 2011190980 A discloses a similar dehumidifier, wherein the control circuit determines a drying target range based on comparison of the surface temperature with a predetermined temperature threshold and temporal change of the surface temperature, and controls the wind direction changing means 1 to blow the dry air to the drying target range.

JP 2009 131786 A describes a similar dehumidifier, wherein a surface temperature detection means is configured to detect the surface temperature of clothes to be dried in the direction of a wind direction changing means, and the clothes to be dried are first identified and then subjected to dry air.

JP 2009 219582 A shows a dehumidifier which is provided with a dehumidifying means, a blowing means, an airflow direction changing means, a humidity detecting means, a temperature detecting means, a surface temperature detecting means, and a control means for controlling the airflow direction of the airflow direction changing means. The control means specifies, from the surface temperature detected by the surface temperature detecting means, the area where objects to be dried such as wet clothing are placed, and blows air thereon.

### Summary of Invention

### Technical Problem

In the conventional dehumidifier described above, because in detecting the temperature of an object to be dried, the blowing direction of dehumidifying air is specified as a direction different from the detection direction of the infrared detection means, air blowing is performed toward a range in which the object to be dried is not present and hence there is a useless time which is completely unnecessary for the drying of the object to be dried, posing the problem that the drying time is long.

The present invention was made in order to solve the above-described problem and the object of the present invention is to obtain a dehumidifier capable of performing air blowing only to a range in which an object to be dried is present even in the case where a plurality of objects to be dried are placed in such a manner as to be present here and there in a room.

### Means for Solving the Problems

The dehumidifier of the present invention comprises: dehumidification means for removing moisture contained in the air; air blowing means for sucking the air in a room and blowing out dry air obtained by causing the sucked air to pass through the
dehumidification means into the room; wind direction changing means for changing the blowing-out direction of the dry air; humidity detection means for detecting humidity in the room; temperature detection means for detecting temperature of the air in the room; surface temperature detection means for detecting surface temperature in the room within a predetermined range; and control means for controlling the wind direction set by the wind direction changing means and the temperature detection means; wherein the surface temperature detection means is configured so as to detect a temperature at a surface substantially of the same direction as the blowing-out direction of the dry air, and wherein the control means identifies a range in which objects to be dried, such as wet clothes, are placed based on the surface temperature detected by the surface temperature detection means within the predetermined range, so as to blow the dry air from the air blowing means toward the identified range, and not to blow the dry air from the air blowing means to a range in which it has been detected that no object to be dried is placed.

The dehumidifier according to the present invention is further defined in that the control means is configured to identify, based on a surface temperature detected by the surface temperature detection means, a range which is an aggregate of a plurality of areas in which objects to be dried, such as wet clothes, are placed in the predetermined range, and when the range has been identified in a plurality of numbers, control the wind direction changing means so as to perform air blowing sequentially beginning with a range in which the surface temperature is lowest or with a range in which the area is largest in number.

### Advantageous Effect of Invention

According to the present invention, the surface temperature detection means is configured to detect surface temperatures substantially in the same direction as the blowing-out direction of the dry air blown by the wind direction changing means and it is ensured that in performing air blowing, the range in which objects to be dried are placed is identified by controlling the wind direction changing means. Therefore, useless air blowing is not performed in drying and it becomes possible to dry objects to be dried with good efficiency.

### Brief Description of the Drawings

Figure 1 is an appearance perspective view showing a dehumidifier in Embodiment 1 of the present invention.
Figure 2 is a top view of an operating section of the dehumidifier in Embodiment 1 of the present invention, as seen from above.
Figure 3 is a schematic block diagram showing the inside of the dehumidifier in Embodiment 1 of the present invention.
Figure 4 is a schematic perspective view showing wind direction changing means of Figure 1, which is enlarged.
Figure 5 is a conceptual diagram showing the detection range of an infrared sensor of the dehumidifier in Embodiment 1 of the present invention.
Figure 6 is a flowchart showing the operation which occur when the drying mode is selected in the dehumidifier in Embodiment 1 of the present invention.
Figure 7 is a flowchart showing the operation which occur when the drying mode is selected in the dehumidifier in Embodiment 2 of the present invention.
Figure 8(a) is a schematic diagram showing ranges in which objects to be dried are placed in the dehumidifier in Embodiment 2 of the present invention.
Figure 8(b) is a conceptual diagram showing the condition obtained when the degree of drying has increased in ranges in which objects to be dried are placed in the dehumidifier in Embodiment 2 of the present invention.
Figure 9 is a flowchart showing the operation which occur when the drying mode is selected in the dehumidifier in Embodiment 3 of the present invention.
Figure 10(a) is a schematic diagram showing ranges in which objects to be dried are placed in the dehumidifier in Embodiment 3 of the present invention; Figure 10(b) is a conceptual diagram showing the condition obtained when the degree of drying has increased in ranges in which objects to be dried are placed in the dehumidifier in Embodiment 3 of the present invention.

### Description of Embodiments

### Embodiment 1

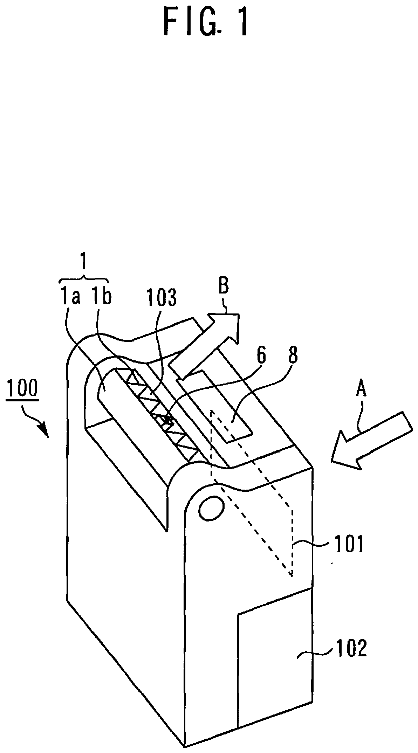

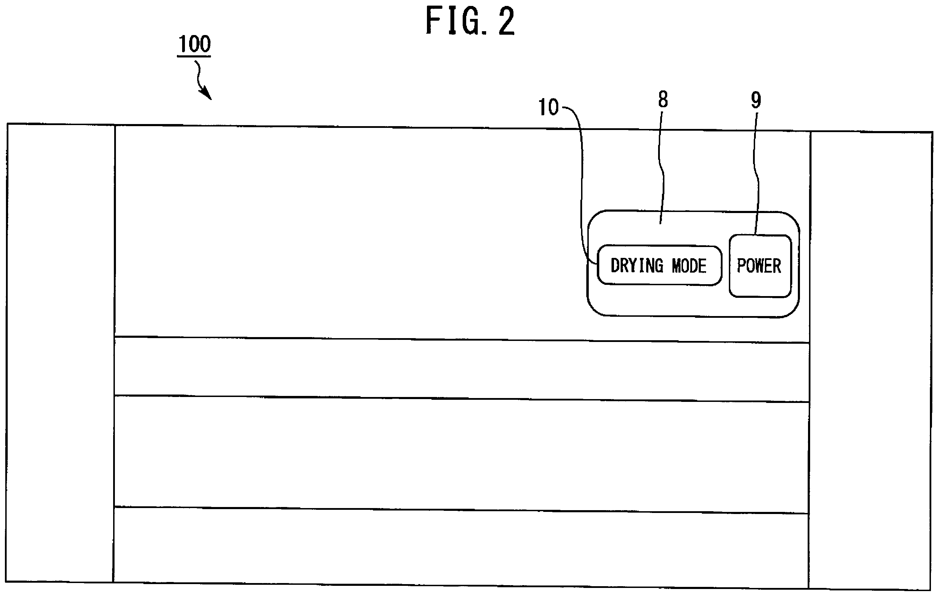

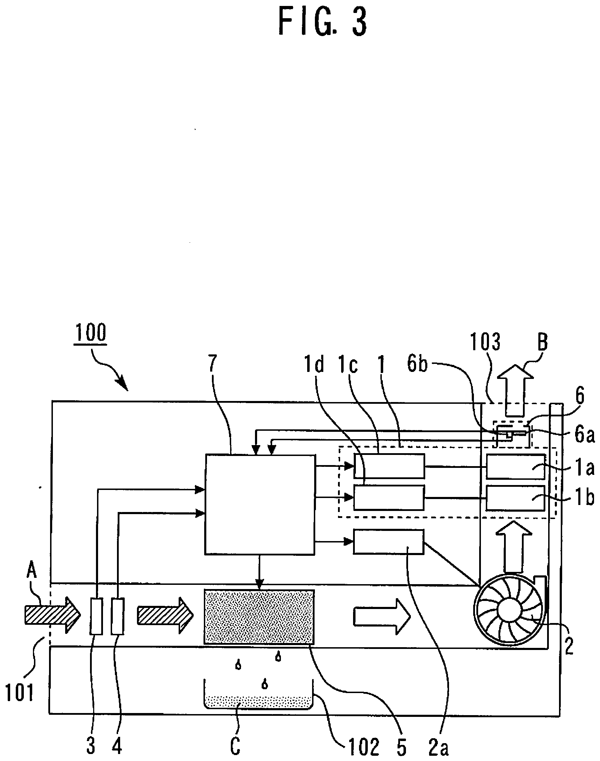

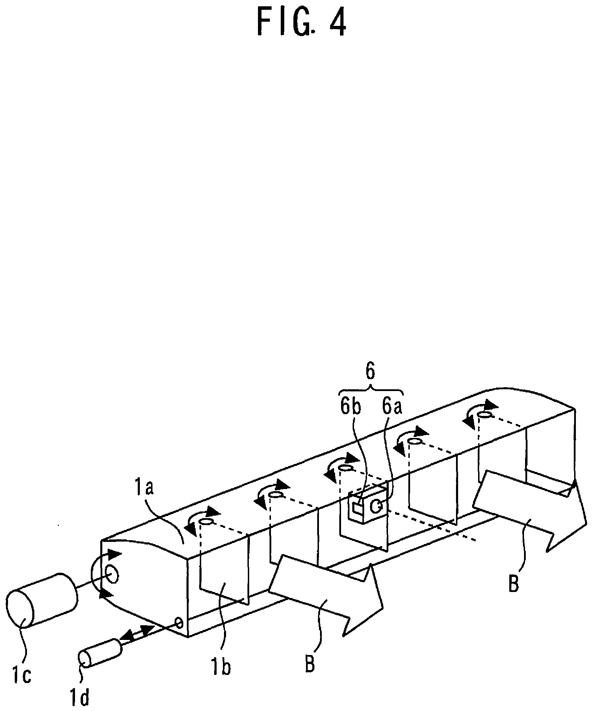

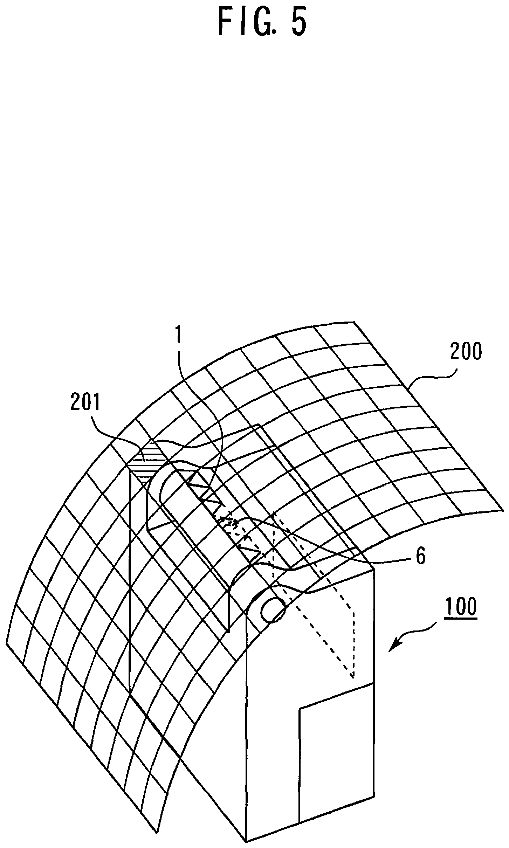

Figure 1 is an appearance perspective view showing a dehumidifier in Embodiment 1 of the present invention, Figure 2 is a top view of an operating section of the dehumidifier in Embodiment 1 of the present invention, as seen from above, Figure 3 is a schematic block diagram showing the inside of the dehumidifier in Embodiment 1 of the present invention, Figure 4 is a schematic perspective view showing wind direction changing means of Figure 1, which is enlarged, and Figure 5 is a conceptual diagram showing the detection range of an infrared sensor of the dehumidifier in Embodiment 1 of the present invention.

As shown in Figure 1, the dehumidifier of Embodiment 1 of the present invention is composed of a dehumidifier cabinet 100 which is formed to be capable of self-standing, a suction opening 101 for taking the room air A into the dehumidifier cabinet 100, a water storage tank 102 which accumulates the water removed from the air taken into the suction opening 101, and an exhaust opening 103 which exhausts the dry air B, from which moisture has been removed, from the dehumidifier cabinet 100 into the room.

The exhaust opening 103 is provided with wind direction changing means 1 capable of changing the wind direction of the dry air B. The wind direction changing means 1 is composed of a longitudinal-direction louver la which changes the vertical wind direction and a lateral-direction louver 1b which changes the horizontal wind direction.

The water storage tank 102 is detachably attached to the dehumidifier cabinet 100.

Furthermore, as shown in Figure 2, an operating section 8 is provided on an upper surface of the dehumidifier cabinet 100, and the operating section 8 is provided with, for example, a power switch 9 and a drying mode switch 10.

And as shown in Figure 3, the above-described dehumidifier is provided with a blower fan 2 which constitutes air blowing means generating an airstream that sucks the room air A from the suction opening 101 and exhausts the dry air B from the exhaust opening 103, a fan motor 2a which rotates the blower fan 2, a temperature sensor 3 (temperature detection means) which detects the temperature of the room air A sucked from the suction opening 101, a humidity sensor 4 (humidity detection means) which detects the humidity of the room air A, and dehumidification means 5 which removes the moisture contained in the room air A and generates the dry air B.

Furthermore, there are provided a longitudinal-direction changing motor 1c which changes the direction of the longitudinal-direction louver 1a constituting the wind direction changing means 1 to the vertical direction, a lateral-direction changing motor 1d which changes the direction of the lateral-direction louver 1b constituting the wind direction changing means 1 to the horizontal direction, an infrared sensor 6 which is surface temperature detection means, and a control circuit 7 which includes control means controlling the wind direction changing means 1 and controls the infrared sensor 6, which is surface temperature detection means, and the like.

The dehumidification means 5 may be any type so long that it is capable of removing moisture in the air and condensing it, and examples of most general types in use include a type in which a heat pump circuit is formed and the moisture in the air is condensed in an evaporator and the desiccant type in which the moisture in the air removed by an adsorbent is condensed in an heat exchanger. The moisture removed by the dehumidification means 5 from the room air A is stored in the water storage tank 102 as condensed water C.

As shown in Figure 4, the longitudinal-direction louver 1a has a rectangular opening extending in the width direction of the dehumidifier cabinet 100 and is configured to be movable in the vertical direction, with the rotating shaft of the above-described longitudinal-direction changing motor 1c substantially as an axis. The lateral-direction louvers 1b are arranged in the longitudinal-direction louver 1a at equal intervals, while being pivotally supported so as to be movable in the horizontal direction to the back on the side opposite to the opening of the longitudinal-direction louver 1a, so that they are configured to move in response to the driving of the above-described lateral-direction changing motor 1d.

The infrared sensor 6 is attached to one surface of the lateral-direction louver 1b arranged almost at the center of the longitudinal-direction louver 1a. As a result of this, the detection range of surface temperatures detected by the infrared sensor 6 becomes almost the same as the direction of the dry air B changed by the wind direction changing means 1.

That is, the infrared sensor 6 can detect surface temperatures of objects, for examples, wet clothes and towels after being washed (hereinafter generically referred to as "objects to be dried") in the whole region within a range to which the wind direction changing means 1 can perform air blowing.

As the above-described infrared sensor 6, for example, an infrared sensor using the thermo-electromotive force effect is used, and the above-described infrared sensor 6 is composed of an infrared absorbing film 6a which receives thermal radiations (infrared rays) emitted from the surfaces in a predetermined region and a thermistor 6b which detects the temperature of the infrared absorbing film 6a (see Figures 3 and 4).

This infrared sensor 6 converts a difference in the temperature of a heat sensing portion (a warm junction) of the infrared absorbing film 6a which rises by absorbing thermal radiations and the temperature of the infrared absorbing film 6a (a cold junction) which is detected by the thermistor 6b into an electrical signal, such as voltage, and inputs the difference to the control circuit 7. Surface temperature in a predetermined region can be determined from the value of this electrical signal.

Here, a method of detecting surface temperatures in a predetermined region will be described with reference to Figure 5.

As shown in Figure 5, given that the whole region in which the infrared sensor 6 is capable of detection is regarded as a whole scanning range 200, the whole scanning range 200 becomes a planar range which extends in a lateral direction (the horizontal direction) and in a longitudinal direction (the vertical direction). This infrared sensor 6 is controlled in such a manner as to detect surface temperatures in each of areas in the whole scanning range 200 divided into a plurality of parts (for example, one block of area is denoted by 201) in the horizontal direction and the vertical direction. As a result of this, it becomes possible to prepare detailed temperature maps for a wide-ranging region.

Operation of the control circuit 7 is started by the input of the power switch 9 and in a case where the control circuit 7 detects that a dehumidification mode has been selected by the operation of a switch which is not shown, the control circuit 7 drives the wind direction changing means 1 and permits air blowing from the exhaust opening 103 so that the humidity in the room becomes an optimum humidity, while rotating the blower fan 2 by driving the fan motor 2a, so as to drive the dehumidification means 5.

And the control circuit 7 drives the longitudinal-direction changing motor 1c and lateral-direction changing motor 1d of the wind direction changing means 1 so that air blowing is performed in the direction of a desired region in the room. As a result of this, the room air A is taken from the suction opening 101 into the dehumidifier cabinet 100, and after the detection of temperature and humidity in the room by the temperature sensor 3 and the humidity sensor 4, respectively, the room air A becomes the dry air B by being dehumidified by the dehumidification means 5, and is blown out from the exhaust opening 103 into the room.

Furthermore, in the case where the control circuit 7 detects from the operation of the drying mode switch 10 of the operating section 8 shown in Figure 2, that the drying mode has been selected for objects to be dried, represented by laundry, such as cloths, for example, the control circuit 7 drives the wind direction changing means 1 and permits air blowing from the exhaust opening 103, rotates the blower fan 2 by driving the fan motor 2a, and drives the dehumidification means 5.

After that, the control circuit 7 reads humidity in the room air A taken into the dehumidifier cabinet 100 via the humidity sensor 4 as humidity in the room, detects surface temperatures for each of the above-described plurality of divided areas (201) using the infrared sensor 6, identifies based on the detection results of surface temperatures the range in which the objects to be dried are placed, controls the longitudinal-direction changing motor 1c and the lateral-direction changing motor 1d so that the dry air B reaches the range, and turns each of the louvers 1a, 1b toward the directions of the objects to be dried.

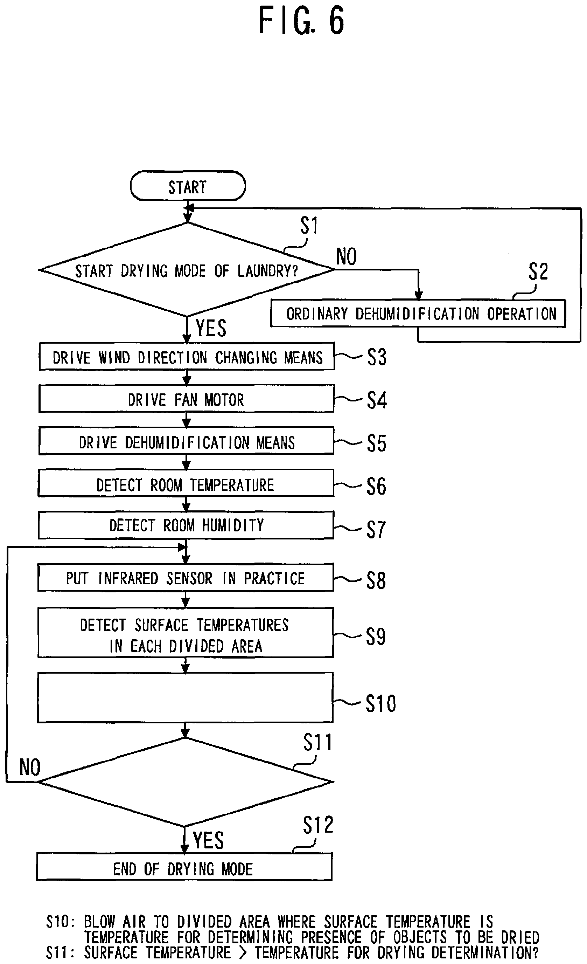

Next, an operation which occur when a drying mode is selected will be described with reference to Figure 6.

Figure 6 is a flowchart showing the operation which occurs when the drying mode is selected in the dehumidifier in the first embodiment of the present invention.

When the operation is started by the input of the power switch 9 and the control circuit 7 of the dehumidifier detects that the drying mode of objects to be dried has been selected (S1), the control circuit 7 of the dehumidifier permits air blowing from the exhaust opening 103 by driving the wind direction changing means 1 (S3), rotates the blower fan 2 by driving the fan motor 2a (S4), and drives the dehumidification means 5 (S5).

It should be noted that when it is judged in S1 that the drying mode of objects to be dried is not selected after the operation is started by the input of the power switch 9, actions are continued by an ordinary dehumidification operation (S2). Because the actions of the ordinary dehumidification operation (S2) were described in the preceding paragraphs, the description thereof here are omitted.

The room air A is taken from the suction opening 101 into the dehumidifier cabinet 100 when the above-described blower fan 2 rotates, then the moisture contained in the room air A is removed by the dehumidification means 5, and the dry air B is blown out of the exhaust opening 103. At this time, the control circuit 7 reads the temperature in the room detected by the temperature sensor 3 (S6) and reads the humidity in the room detected by the humidity sensor 4 (S7).

After that, the control circuit 7 put the infrared sensor 6 in practice (S8). As described above, the detection range (the whole scanning range 200) of surface temperatures by the infrared sensor 6 almost matches with the direction of the dry air B which is changed by the longitudinal-direction louver 1a and the lateral-direction louver 1b, it is ensured that it is possible to detect surface temperatures of the whole region in the range to which each of the louvers 1a, 1b can perform air blowing, and surface temperatures in each of the plurality of divided areas (for example, one block of area is denoted by 201) for the whole scanning range 200 of the infrared sensor 6 are detected.

Then, the control circuit 7 determines whether an object to be dried is placed (S9) based on the temperature in the room read in S6 and the surface temperatures in each of the divided areas detected by the above-described infrared sensor 6.

Whether there is an object to be dried or not is determined by a result of a comparison between the detected surface temperatures and a first predetermined temperature (a temperature for determining the presence of objects to be dried). The first predetermined temperature is set by subtracting a numerical value, which is selected from a table prepared beforehand by the temperature in the room read in S6 and the humidity in the room read in S7, from the temperature in the room read in S6. Therefore, in a case where there is an area in which the surface temperature is equal to or less than the first predetermined temperature, it is determined that an object to be dried is placed in that area.

When determining that it has been detected in S9 that an area in which an object to be dried is placed among a plurality of divided areas for the whole scanning range 200 of the infrared sensor 6, the control circuit 7 controls each of the longitudinal-direction changing motor 1c and the lateral-direction changing motor 1d so that the air blowing direction is turned toward only the area in which the object to be dried is placed, and causes the directions of the longitudinal-direction louver 1a and the lateral-direction louver 1b to be changed (S10). As a result of this, the dry air B from the exhaust opening 103 is blown out only in the direction in which the object to be dried is placed.

After turning each of the louvers 1a, 1b toward the area in which the object to be dried is placed, the control circuit 7 makes a comparison between surface temperatures and a second predetermined temperature (drying temperature), which is higher than the first predetermined temperature, for each of the divided areas (S11) and repeats the control of S 8 to S10 when the surface temperatures are lower than the predetermined temperature.

As with the first predetermined temperature, the above-described second predetermined temperature is set by subtracting a numerical value, which is selected from a table prepared beforehand by the temperature in the room read in S6 and the humidity in the room read in S7, from the temperature in the room read in S6. Because the numerical value which is selected is smaller than the first predetermined temperature, the extent of subtraction becomes smaller. Therefore, the second predetermined temperature is set at high temperatures compared to the first predetermined temperature.

When surface temperatures become higher than the second predetermined temperature while the control of S8 to S10 is being repeated, the control circuit 7 determines that the object to be dried has been dried, and changes the air blowing direction so that air blowing is performed to other divided areas.

After that, when all objects to be dried in the detection range have been dried, the control circuit 7 stops the driving of the dehumidification means 5, stops the driving of the fan motor 2a, stops the driving of the wind direction changing means 1, provides information on that condition by, for example, a buzzer which is not shown in the figures, and finishes the drying mode (S12).

As described above, according to Embodiment 1 of the present invention, an area in which objects to be dried are placed is detected and it is ensured that the wind direction changing means is controlled so that dry air is blown only to the area in which objects to be dried are placed, whereby the air blowing direction is changed. Therefore, it is possible to preferentially blow dry air to the objects to be dried and the effect that objects to be dried can be dried with good efficiency is obtained.

In Embodiment 1 of the present invention, in the case of the drying mode of objects to be dried, the air A in the room is taken into the dehumidifier cabinet 100 by operating the dehumidifier, the humidity in the room is detected, and the dry air B is blown out toward the inside of the room when the humidity is higher than a predetermined humidity. However, the drying method is not limited to this. For example, a heater which is heating means is provided inside the dehumidifier cabinet 100, and as described above, when the humidity in the room is higher than a predetermined humidity, the heater is energized and warm air is blown out from the exhaust opening 103. As a result of this, it is possible to early reduce the humidity in the room and, therefore, through the use of the infrared sensor 6, it becomes easier to identify an area in which objects to be dried are placed.

### Embodiment 2

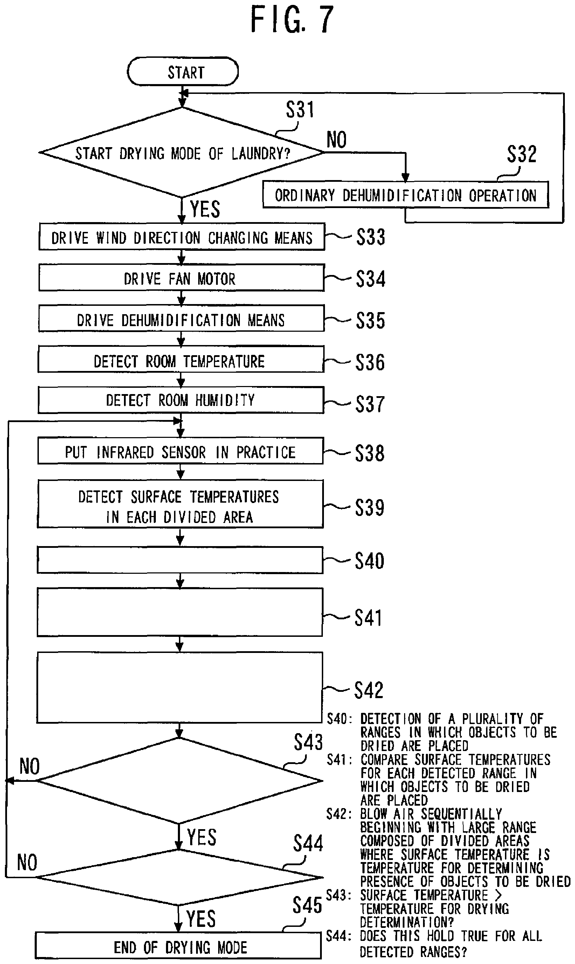

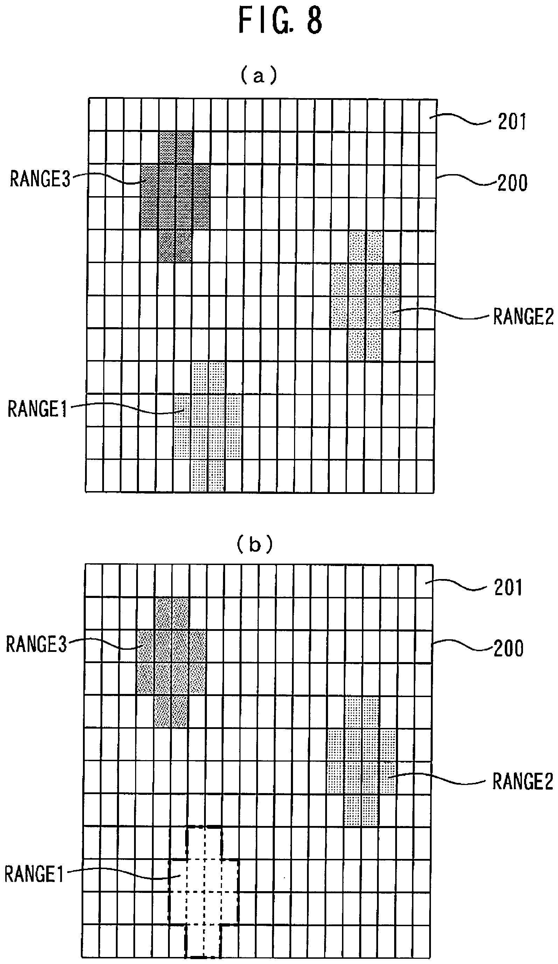

A dehumidifier in Embodiment 2 of the present invention is the same as the dehumidifier in Embodiment 1 of the present invention in the configuration and the method of detecting surface temperatures described in Figure 1 to Figure 5 and differs only in operation when the drying mode is selected. Therefore, descriptions of parts other than pertinent parts are omitted and the operation which occur when the drying mode is selected will be described with reference to Figure 7, Figures 8(a) and 8(b). Figure 7 is a flowchart showing the operation which occur when the drying mode is selected in the dehumidifier in Embodiment 2 of the present invention, Figure 8(a) is a schematic diagram showing ranges in which objects to be dried are placed in the dehumidifier in Embodiment 2 of the present invention, and Figure 8(b) is a conceptual diagram showing the condition obtained when the degree of drying has increased in ranges in which objects to be dried are placed in the dehumidifier in Embodiment 2 of the present invention.

When operation is started by the input of the power switch 9 and the control circuit 7 of the dehumidifier detects that the drying mode of objects to be dried has been selected (S31), the control circuit 7 of the dehumidifier permits air blowing from the exhaust opening 103 by driving the wind direction changing means 1 (S33), rotates the blower fan 2 by driving the fan motor 2a (S34), and drives the dehumidification means 5 (S35).

It should be noted that when it is judged in S31 that the drying mode of objects to be dried is not selected after the operation is started by the input of the power switch 9, actions are continued by an ordinary dehumidification operation (S32).

The room air A is taken from the suction opening 101 into the dehumidifier cabinet 100 when the above-described blower fan 2 rotates, then the moisture contained in the room air A is removed by the dehumidification means 5, and the dry air B is blown out of the exhaust opening 103. At this time, the control circuit 7 reads the temperature in the room detected by the temperature sensor 3 (S36) and reads the humidity in the room detected by the humidity sensor 4 (S37).

After that, the control circuit 7 put the infrared sensor 6 in practice (S38). As described above, the detection range (the whole scanning range 200) of surface temperatures by the infrared sensor 6 almost matches with the direction of the dry air B which is changed by the longitudinal-direction louver 1a and the lateral-direction louver 1b, it is ensured that it is possible to detect surface temperatures of the whole region in the range to which each of the louvers 1a, 1b can perform air blowing, and surface temperatures in each of the plurality of divided areas (for example, one block of area is denoted by 201) for the whole scanning range 200 of the infrared sensor 6 are detected.

Then, the control circuit 7 determines whether an object to be dried is placed (S39) based on the temperature in the room read in S36 and the surface temperatures in each of the divided areas detected by the above-described infrared sensor 6.

In the same manner as in Embodiment 1 of the present invention, whether there is an object to be dried or not is determined by a result of a comparison between the detected surface temperatures and a first predetermined temperature (a temperature for determining the presence of objects to be dried). The first predetermined temperature is set by subtracting a numerical value, which is selected from a table prepared beforehand by the temperature in the room read in S36 and the humidity in the room read in S37, from the temperature in the room read in S36. Therefore, in a case where there is an area in which the surface temperature is equal to or less than the first predetermined temperature, it is determined that an object to be dried is placed in that area.

When determining that it has been detected in S39 that a plurality of ranges in which objects to be dried are placed among a plurality of divided areas for the whole scanning range 200 of the infrared sensor 6 (for example, ranges 1 to 3 shown in Figure 8(a)) (S40), the control circuit 7 compares surface temperatures for each of the plurality of the detected ranges in which objects to be dried are placed (S41).

After the comparison of the surface temperatures in S41, the control circuit 7 controls each of the longitudinal-direction changing motor 1c and the lateral-direction changing motor 1d so that air blowing is performed sequentially beginning with a range having a low surface temperature among a plurality of ranges in which objects to be dried are placed, that is, if for example, the surface temperatures in the range 1 to the range 3 shown in Figure 8(a) are such that surface temperature in the range 1 > surface temperature in the range 2 > surface temperature in the range 3, then air blowing is performed sequentially beginning with the range 3 in which the temperature is lowest, and causes the directions of the longitudinal-direction louver 1a and the lateral-direction louver 1b to be changed (S42). As a result of this, the dry air B from the exhaust opening 103 is blown out only in the direction in which the objects to be dried are placed in the order of ascending surface temperatures.

After turning each of the louvers 1a, 1b toward the areas in which objects to be dried are placed, the control circuit 7 makes a comparison between surface temperatures and a second predetermined temperature (drying temperature), which is higher than the first predetermined temperature, for each of the divided areas (S43) and repeats the control of S38 to S42 when the surface temperatures are lower than the predetermined temperature.

As with the first predetermined temperature, the above-described second predetermined temperature is set by subtracting a numerical value, which is selected from a table prepared beforehand by the temperature in the room read in S36 and the humidity in the room read in S37, from the temperature in the room read in S36.

Because a numerical value which is selected is smaller than the first predetermined temperature, the extent of subtraction becomes smaller. Therefore, as with Embodiment 1 of the present invention, the second predetermined temperature is set at high temperatures compared to the first predetermined temperature.

When surface temperatures become higher than the second predetermined temperature while the control of S38 to S42 is being repeated, the control circuit 7 determines whether the surface temperatures in all of the detected ranges in which objects to be dried are placed have become higher than the second predetermined temperature (S44).

In the case where the surface temperatures in all of the ranges in which objects to be dried are placed have not become higher than the second predetermined temperature, the flow of control returns to S38, where the control until S42 is repeated. However, in this case, if it is determined in S43 that there is a range in which the surface temperature is higher than the second predetermined temperature and for example, as shown in Figure 8(b), the surface temperature in the range 1 is higher than the second predetermined temperature, then the range 1 is excluded in S40, a comparison is made in S41 between the surface temperature in the range 2 and the surface temperature in the range 3, and in S42 the control circuit 7 controls each of the longitudinal-direction changing motor 1c and the lateral-direction changing motor 1d so that air blowing is performed sequentially beginning with the range 3 followed by the range 2, with the range 1 excluded, and causes the directions of the longitudinal-direction louver 1a and the lateral-direction louver 1b to be changed.

After that, when in S44 the control circuit 7 determines that all of the objects to be dried in the detection range have been dried, the control circuit 7 stops the driving of the dehumidification means 5, stops the driving of the fan motor 2a, stops the driving of the wind direction changing means 1, provides informed on that condition by a buzzer, for example, which is not shown in the figures, and finishes the drying mode (S45).

As described above, according to Embodiment 2 of the present invention, even when a plurality of areas in which objects to be dried are placed are detected, it is ensured that the wind direction changing means is controlled so that dry air is blown only to the area in which objects to be dried are placed in the order of ascending surface temperatures, whereby, during this process, the air blowing direction is changed so as to exclude ranges in which objects have already been dried. Therefore, it is possible to preferentially blow dry air to the objects to be dried and the effect that objects to be dried can be dried with good efficiency is obtained.

### Embodiment 3

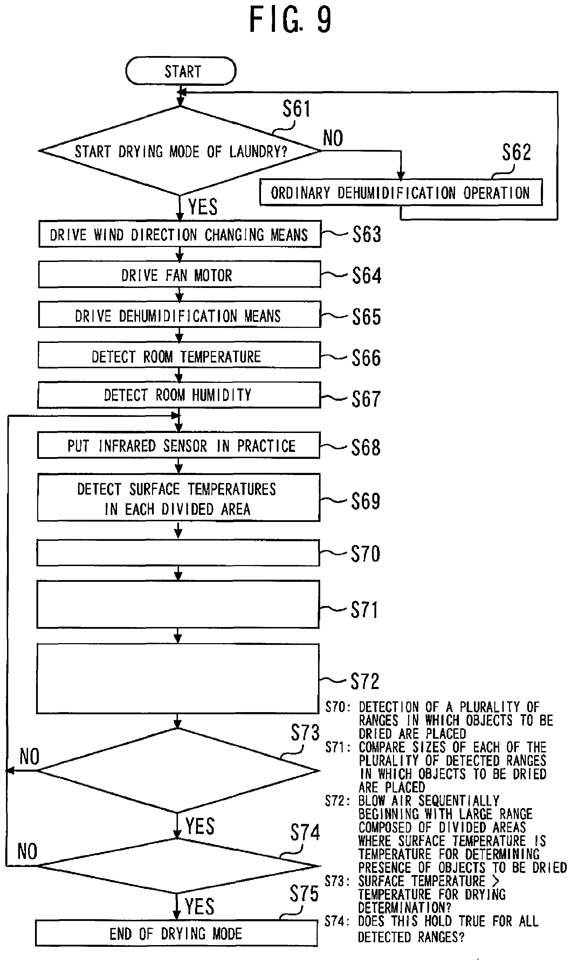

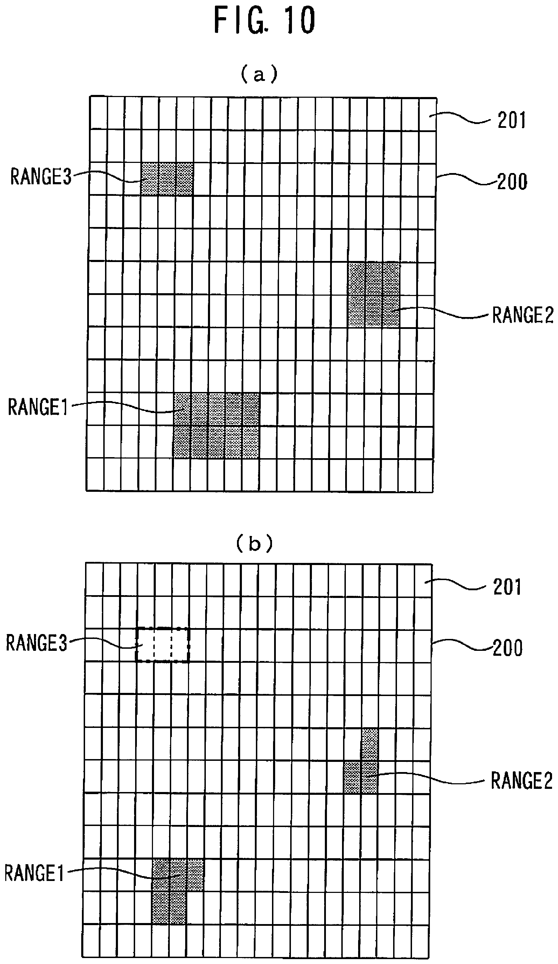

A dehumidifier in Embodiment 3 of the present invention is the same as the dehumidifier in Embodiment 1 of the present invention in the configuration and the method of detecting surface temperatures described in Figure 1 to Figure 5 and differs from Embodiment 1 of the present invention and Embodiment 2 of the present invention only in operation when the drying mode is selected. Therefore, descriptions of parts other than pertinent parts are omitted and the operation which occur when the drying mode is selected will be described with reference to Figure 9, Figures 10(a) and 10(b). Figure 9 is a flowchart showing the operation which occur when the drying mode is selected in the dehumidifier in Embodiment 3 of the present invention, Figure 10(a) is a schematic diagram showing ranges in which objects to be dried are placed in the dehumidifier in Embodiment 3 of the present invention, and Figure 10(b) is a conceptual diagram showing the condition obtained when the degree of drying has increased in ranges in which objects to be dried are placed in the dehumidifier in Embodiment 3 of the present invention.

When operation is started by the input of the power switch 9 and the control circuit 7 of the dehumidifier detects that the drying mode of objects to be dried has been selected (S61), the control circuit 7 of the dehumidifier permits air blowing from the exhaust opening 103 by driving the wind direction changing means 1 (S63), rotates the blower fan 2 by driving the fan motor 2a (S64), and drives the dehumidification means 5 (S65).

It should be noted that when it is judged in S61 that the drying mode of objects to be dried is not selected after the operation is started by the input of the power switch 9, actions are continued by an ordinary dehumidification operation (S62).

The room air A is taken from the suction opening 101 into the dehumidifier cabinet 100 when the above-described blower fan 2 rotates, then the moisture contained in the room air A is removed by the dehumidification means 5, and the dry air B is blown out of the exhaust opening 103. At this time, the control circuit 7 reads the temperature in the room detected by the temperature sensor 3 (S66) and reads the humidity in the room detected by the humidity sensor 4 (S67).

After that, the control circuit 7 put the infrared sensor 6 in practice (S68). As described above, the detection range (the whole scanning range 200) of surface temperatures by the infrared sensor 6 almost matches with the direction of the dry air B which is changed by the longitudinal-direction louver 1a and the lateral-direction louver 1b, it is ensured that it is possible to detect surface temperatures of the whole region in the range to which each of the louvers 1a, 1b can perform air blowing, and surface temperatures in each of the plurality of divided areas (for example, one block of area is denoted by 201) for the whole scanning range 200 of the infrared sensor 6 are detected.

Then, the control circuit 7 determines whether an object to be dried is placed (S69) based on the temperature in the room read in S66 and the surface temperatures in each of the divided areas detected by the above-described infrared sensor 6.

In the same manner as in Embodiment 1 of the present invention and Embodiment 2 of the present invention, whether there is an object to be dried or not is determined by a result of a comparison between the detected surface temperatures and a first predetermined temperature (a temperature for determining the presence of objects to be dried). The first predetermined temperature is set by subtracting a numerical value, which is selected from a table prepared beforehand by the temperature in the room read in S66 and the humidity in the room read in S67, from the temperature in the room read in S66. Therefore, in a case where there is an area in which the surface temperature is equal to or less than the first predetermined temperature, it is determined that an object to be dried is placed in that area.

When determining that it has been detected in S69 that a plurality of ranges in which objects to be dried are placed among a plurality of divided areas for the whole scanning range 200 of the infrared sensor 6 (for example, ranges 1 to 3 shown in Figure 8(a)) (S70), the control circuit 7 compares sizes of each of the plurality of the detected ranges in which objects to be dried are placed (S71).

The size of a range is determined by the number of areas adjacent to each other at the same temperature. For example, as shown in Figure 10(a), if the number of divided areas is 10 in the range 1, the number of divided areas is 6 in the range 2, and the number of divided areas is 3 in the range 3, then the size of a range is range 1 > range 2 > range 3.

After the comparison of the size of ranges in S71, the control circuit 7 controls each of the longitudinal-direction changing motor 1c and the lateral-direction changing motor 1d so that air blowing is performed sequentially beginning with a large range among a plurality of ranges in which objects to be dried are placed, that is, if for example, as described above, the size of ranges is such that range 1 > range 2 > range 3, then air blowing is performed sequentially beginning with the range 1 which is the largest and causes the directions of the longitudinal-direction louver 1 a and the lateral-direction louver 1b to be changed (S72). As a result of this, the dry air B from the exhaust opening 103 is blown out only in the direction of areas in which objects to be dried are placed in the order of descending sizes of range.

After turning each of the louvers 1a, 1b toward the areas in which objects to be dried are placed, the control circuit 7 makes a comparison between surface temperatures and a second predetermined temperature (drying temperature), which is higher than the first predetermined temperature, for each of the divided areas (S73) and repeats the control of S68 to S72 when the surface temperatures are lower than the predetermined temperature.

As with the first predetermined temperature, the above-described second predetermined temperature is set by subtracting a numerical value, which is selected from a table prepared beforehand by the temperature in the room read in S66 and the humidity in the room read in S67, from the temperature in the room read in S66.

Because a numerical value which is selected is smaller than the first predetermined temperature, the extent of subtraction becomes smaller. Therefore, as with Embodiment 1 of the present invention and Embodiment 2 of the present invention, the second predetermined temperature is set at high temperatures compared to the first predetermined temperature.

When surface temperatures become higher than the second predetermined temperature while the control of S68 to S72 is being repeated, the control circuit 7 determines whether the surface temperatures in all of the detected ranges in which objects to be dried are placed have become higher than the second predetermined temperature (S74).

In the case where the surface temperatures in all of the ranges in which objects to be dried are placed have not become higher than the second predetermined temperature, the flow of control returns to S68, where the control until S72 is repeated. However, in this case, if it is determined in S63 that there is a range in which the surface temperature is higher than the second predetermined temperature and for example, as shown in Figure 10(b), the surface temperature in the range 3 which is the smallest range is higher than the second predetermined temperature, then the range 3 is excluded in S70, a comparison is made in S71 between the size of the range 1 and the size of the range 2, and in S72 the control circuit 7 controls each of the longitudinal-direction changing motor 1c and the lateral-direction changing motor 1d so that air blowing is performed sequentially beginning with the range 1 followed by the range 2, with the range 3 excluded, and causes the directions of the longitudinal-direction louver 1a and the lateral-direction louver 1b to be changed.

After that, when in S74 the control circuit 7 determines that all of the objects to be dried in the detection range have been dried, the control circuit 7 stops the driving of the dehumidification means 5, stops the driving of the fan motor 2a, stops the driving of the wind direction changing means 1, provides informed on that condition by a buzzer, for example, which is not shown in the figures, and finishes the drying mode (S75).

As described above, according to Embodiment 3 of the present invention, even when a plurality of areas in which objects to be dried are placed are detected, it is ensured that the wind direction changing means is controlled so that dry air is blown only to the area in which objects to be dried are placed in the order of descending sizes of range, whereby, during this process, the air blowing direction is changed so as to exclude ranges in which objects have already been dried. Therefore, it is possible to preferentially blow dry air to the objects to be dried and the effect that objects to be dried can be dried with good efficiency is obtained.

In the embodiments of the present invention, in the case where a plurality of areas in which objects to be dried are placed are detected, in Embodiment 2 control is performed so that air blowing is performed in the order of ascending surface temperatures and in Embodiment 3 control is performed so that air blowing is performed in the order of descending sizes of range. However, control is not limited to these control methods.

For example, in the case where there are a range X1 which has a low surface temperature and is small in size and a range X2 which has a higher surface temperature than the range X1 and is larger in size, in consideration of both temperature and the size of range, control is performed so that air blowing is performed beginning with the range X2 when the size of the range X2 is larger than the size of the range X1 by not less than a predetermined value, and control is performed so that air blowing is performed beginning with the range X2 when the size of the range X2 is larger than the size of the range X1 by less than a predetermined value.

### Industrial Applicability

As described above, the dehumidifier of the present invention can be used in drying laundry which are objects hung in a room to be dried.

### Description of Symbols

1 wind direction changing means, 1a longitudinal-direction louver, 1b lateral-direction louver, 1c direction changing motor, 1d lateral-direction changing motor, 2 blower fan, 2a fan motor, 3 temperature sensor, 4 humidity sensor, 5 dehumidification means, 6 infrared sensor, 6a infrared absorbing film, 6b thermistor, 7 control circuit, 8 operating section, 9 power switch, 10 drying mode switch, 100 dehumidifier cabinet, 101 suction opening, 102 water storage tank, 103 exhaust opening, 200 whole scanning range, 201 divided area, A room air, B dry air.

## Claims

1. A dehumidifier comprising:
dehumidification means (5) configured to remove moisture contained in the air;
air blowing means (2) configured to suck the air in a room and blow out dry air obtained by causing the sucked air to pass through the dehumidification means (5) into the room;
wind direction changing means (1) configured to change the blowing-out direction of the dry air;
humidity detection means (4) configured to detect humidity in the room;
temperature detection means (3) configured to detect temperature of the air in the room;
surface temperature detection means (6) configured to detect surface temperature in the room within a predetermined range; and
control means (7) configured to control the wind direction set by the wind direction changing means (1) and the temperature detection means (3);
wherein the surface temperature detection means (6) is configured so as to detect a temperature at a surface substantially of the same direction as the blowing-out direction of the dry air, and
wherein the control means (7) is configured to identify a range in which objects to be dried, such as wet clothes, are placed based on the surface temperature detected by the surface temperature detection means (6) within the predetermined range, control the wind direction changing means (1) so as to blow the dry air from the air blowing means (2) toward the identified range, and control the wind direction changing means (1) not to blow the dry air from the air blowing means (2) to a range in which it has been detected that no object to be dried is placed,
**characterized in that** the control means (7) is configured to identify, based on a surface temperature detected by the surface temperature detection means (6), a range which is an aggregate of a plurality of areas in which objects to be dried, such as wet clothes, are placed in the predetermined range, and when the range has been identified in a plurality of numbers, control the wind direction changing means (1) so as to perform air blowing sequentially beginning with a range in which the surface temperature is lowest or with a range in which the areas are largest in number.

2. The dehumidifier according to claim 1, further comprising:
operation means (8) configured to select a drying mode for drying objects to be dried, such as wet clothes,
wherein the control means (7) is configured to control the wind direction set by the wind direction changing means (1), the temperature detection means (3), the operation means (8) and the like; and
wherein upon selection of the drying mode by the operation means (8), the control means (7) is configured to identify a range in which objects to be dried, such as wet clothes, are placed based on the surface temperature detected by the surface temperature detection means (6) within the predetermined range, so as to blow the dry air from the air blowing means (2) toward the identified range, and not to blow the dry air from the air blowing means (2) to a range in which it has been detected that no object to be dried is placed.

3. The dehumidifier according to claim 1 or 2, wherein the predetermined range is divided into a plurality of areas which are adjacent to each other in two axis line directions intersecting at right angles, and
wherein the detection direction is changed sequentially so that temperatures from one end portion to the other end portion of each of the areas are individually detected by the control means (7), whereby the surface temperature detection means (6) detects a surface temperature distribution of all of the areas.

4. The dehumidifier according to claim 1 or 2, wherein the predetermined range is divided into a plurality of areas which are adjacent to each other in the perpendicular direction and the horizontal direction,
wherein the wind direction changing means (1) is configured to change the blowing-out direction of the dry air at least in the vertical direction and the horizontal direction, and
wherein the surface temperature detection means (6) is such that the direction thereof is controlled by the control means (7) so that a temperature detection surface faces the blowing-out direction in response to the blowing-out direction of the wind direction changing means (1) being changed sequentially.

5. The dehumidifier according to any of claims 1 to 4, wherein in the case where a range in which the surface temperature is lowest and a range in which the areas are largest in number differ from each other, the control means (7) Is configured to perform air blowing sequentially beginning with the range in which the surface temperature is lowest.

6. The dehumidifier according to any of claims 1 to 4, wherein in the case where a range in which the surface temperature is lowest and a range in which the areas are largest in number differ from each other, the control means (7) Is configured to perform air blowing sequentially beginning with the range In which the areas are largest in number.

7. The dehumidifier according to claim 3 or 4, wherein in the case where a range in which the surface temperature is lowest and a range in which the areas are largest in number differ from each other, the control means (7) performs air blowing sequentially beginning with the range in which the surface temperature is lowest if a difference between the number of the areas constituting the range in which the surface temperature is lowest and the number of the areas constituting the range in which the areas are largest in number is smaller than a predetermined number and performs air blowing sequentially beginning with the range in which the areas are largest in number if the difference in the number of the areas is not less than the predetermined number.

8. The dehumidifier according to any of claims 1 to 7, wherein in the case where there is a range for which it Is detected based on a surface temperature detected by the surface temperature detection means (6) that the objects have already been dried, the control means (7) is configured to not perform air blowing toward the range.

## Patentansprüche

1. Entfeuchter, umfassend:
Entfeuchtungsmittel (5), eingerichtet, in der Luft enthaltene Feuchtigkeit zu entfernen;
Luftblasmittel (2), eingerichtet, die Luft in einem Raum anzusaugen und Trockenluft auszublasen, die erhalten wird, indem die Ansaugluft veranlasst wird, durch das Entfeuchtungsmittel (5) hindurch in den Raum zu gelangen;
Windrichtungsänderungsmittel (1), eingerichtet, die Ausblasrichtung der Trockenluft zu ändern;
Luftfeuchtigkeitserfassungsmittel (4), eingerichtet, Luftfeuchtigkeit im Raum zu erfassen;
Temperaturerfassungsmittel (3), eingerichtet, Temperatur der Luft im Raum zu erfassen;
Oberflächentemperaturerfassungsmittel (6), eingerichtet, Oberflächentemperatur im Raum innerhalb eines vorherbestimmten Bereichs zu erfassen; und
Steuermittel (7), eingerichtet, die Windrichtung zu steuern, die durch das Windrichtungsänderungsmittel (1) und das Temperaturerfassungsmittel (3) eingestellt ist;
wobei das Oberflächentemperaturerfassungsmittel (6) eingerichtet ist, um eine Temperatur an einer Oberfläche im Wesentlichen von der gleichen Richtung wie der Ausblasrichtung der Trockenluft zu erfassen, und
wobei das Steuermittel (7) eingerichtet ist, um einen Bereich, in welchem zu trocknende Gegenstände, wie nasse Bekleidung, platziert sind, zu identifizieren auf Grundlage der Oberflächentemperatur, die durch das Oberflächentemperaturerfassungsmittel (6) erfasst wurde, innerhalb des vorherbestimmten Bereichs, das Windrichtungsänderungsmittel (1) zu steuern, um die Trockenluft vom Luftblasmittel (2) in Richtung des identifizierten Bereichs zu blasen, und das Windrichtungsänderungsmittel (1) zu steuern, um nicht die Trockenluft vom Luftblasmittel (2) zu einem Bereich zu blasen, in welchem erfasst wurde, dass darin kein zu trocknender Gegenstand platziert ist,
**dadurch gekennzeichnet, dass** das Steuermittel (7) eingerichtet ist, um auf Grundlage einer Oberflächentemperatur, die durch das Oberflächentemperaturerfassungsmittel (6) erfasst wurde, einen Bereich zu identifizieren, welcher eine Gesamtheit von einer Vielzahl von Zonen ist, in welchen zu trocknende Gegenstände, wie nasse Bekleidung, im vorherbestimmten Bereich platziert sind, und, wenn der Bereich in einer Vielzahl von Zahlen identifiziert wurde, das Windrichtungsänderungsmittel (1) zu steuern, um Blasen von Luft sequentiell durchzuführen, beginnend mit einem Bereich, in welchem die Oberflächentemperatur am niedrigsten ist, oder mit einem Bereich, in welchem die Zonen zahlenmäßig am größten sind.

2. Entfeuchter nach Anspruch 1, ferner umfassend:
Betätigungsmittel (8), eingerichtet, einen Trocknungsmodus zum Trocknen von zu trocknenden Gegenständen, wie nasser Bekleidung, auszuwählen,
wobei das Steuermittel (7) eingerichtet ist, die Windrichtung zu steuern, die durch das Windrichtungsänderungsmittel (1), das Temperaturerfassungsmittel (3), das Betätigungsmittel (8) und dergleichen eingestellt wurde, und
wobei auf Auswählen des Trocknungsmodus durch das Betätigungsmittel (8) das Steuermittel (7) eingerichtet ist, um einen Bereich, in welchem sich zu trocknende Gegenstände, wie nasse Bekleidung, platziert sind, zu identifizieren auf Grundlage der Oberflächentemperatur, die durch das Oberflächentemperaturerfassungsmittel (6) erfasst wurde innerhalb des vorherbestimmten Bereichs, um die Trockenluft vom Luftblasmittel (2) in Richtung des identifizierten Bereichs zu blasen, und nicht die Trockenluft vom Luftblasmittel (2) zu einem Bereich zu blasen, in welchem erfasst wurde, dass darin kein zu trocknender Gegenstand platziert ist.

3. Luftentfeuchter nach Anspruch 1 oder 2, wobei der vorherbestimmte Bereich in eine Vielzahl von Zonen unterteilt ist, welche in zwei Achsenlinienrichtungen, die sich in rechten Winkeln schneiden, zueinander benachbart sind, und
wobei die Erfassungsrichtung sequentiell geändert wird, so dass Temperaturen von einem Endabschnitt zum anderen Endabschnitt von jeder der Zonen durch das Steuermittel (7) einzeln erfasst werden, wobei das Oberflächentemperaturerfassungsmittel (6) eine Oberflächentemperaturverteilung aller der Zonen erfasst.

4. Luftentfeuchter nach Anspruch 1 oder 2, wobei der vorherbestimmte Bereich in eine Vielzahl von Zonen unterteilt ist, welche in der senkrechten Richtung und der horizontalen Richtung zueinander benachbart sind,
wobei das Windrichtungsänderungsmittel (1) eingerichtet ist, um die Ausblasrichtung der Trockenluft zumindest in der vertikalen Richtung und der horizontalen Richtung zu ändern, und
wobei das Oberflächentemperaturerfassungsmittel (6) derart ist, dass seine Richtung durch das Steuermittel (7) gesteuert wird, so dass eine Temperaturerfassungsoberfläche der Ausblasrichtung zugewandt ist in Antwort auf die Ausblasrichtung des Windrichtungsänderungsmittels (1), die sequentiell geändert wird.

5. Luftentfeuchter nach einem der Ansprüche 1 bis 4, wobei in dem Fall, wenn ein Bereich, in welchem die Oberflächentemperatur am niedrigsten ist, und ein Bereich, in welchem die Zonen zahlenmäßig am größten sind, sich voneinander unterscheiden, das Steuermittel (7) eingerichtet ist, um Blasen von Luft sequentiell durchzuführen, beginnend mit dem Bereich, in welchem die Oberflächentemperatur am niedrigsten ist.

6. Luftentfeuchter nach einem der Ansprüche 1 bis 4, wobei in dem Fall, wo ein Bereich, in welchem die Oberflächentemperatur am niedrigsten ist, und ein Bereich, in welchem die Zonen zahlenmäßig am größten sind, sich voneinander unterscheiden, das Steuermittel (7) eingerichtet ist, um Blasen von Luft sequentiell durchzuführen, beginnend mit dem Bereich, in welchem die Zonen zahlenmäßig am größten sind.

7. Luftentfeuchter nach Anspruch 3 oder 4, wobei in dem Fall, wenn ein Bereich, in welchem die Oberflächentemperatur am niedrigsten ist, und ein Bereich, in welchem die Zonen zahlenmäßig am größten sind, sich voneinander unterscheiden, das Steuermittel (7) Blasen von Luft sequentiell durchführt, beginnend mit dem Bereich, in welchem die Oberflächentemperatur am niedrigsten ist, falls eine Differenz zwischen der Anzahl der Zonen, die den Bereich bilden, in welchem die Oberflächentemperatur am niedrigsten ist, und der Anzahl der Zonen, die den Bereich bilden, in welchem die Zonen zahlenmäßig am größten sind, kleiner ist als eine vorherbestimmte Anzahl, und Blasen von Luft sequentiell durchführt, beginnend mit dem Bereich, in welchem die Zonen zahlenmäßig am größten sind, wenn die Differenz in der Anzahl der Zonen nicht geringer ist als die vorherbestimmte Anzahl.

8. Luftentfeuchter nach einem der Ansprüche 1 bis 7, wobei in dem Fall, wo es einen Bereich gibt, für welchen auf Grundlage einer durch das Oberflächentemperaturerfassungsmittel (6) erfassten Oberflächentemperatur erfasst wird, dass die Gegenstände bereits getrocknet wurden, das Steuermittel (7) eingerichtet ist, um Blasen von Luft zum Bereich nicht durchzuführen.

## Revendications

1. Déshumidificateur comprenant :
des moyens de déshumidification (5) configurés de façon à éliminer l'humidité contenue dans l'air ;
des moyens de soufflement de l'air (2) configurés de façon à aspirer l'air dans une pièce et à souffler l'air sec obtenu en faisant passer l'air aspiré à travers les moyens de déshumidification (5) dans la pièce ;
des moyens de modification de la direction de l'air (1) configurés de façon à modifier la direction du soufflement de l'air sec ;
des moyens de détection de l'humidité (4) configurés de façon à détecter l'humidité dans la pièce ;
des moyens de détection de la température (3) configurés de façon à détecter la température de l'air dans la pièce ;
des moyens de détection de la température de la surface (6) configurés de façon à détecter la température de la surface dans la pièce à l'intérieur d'une plage prédéterminée ; et
des moyens de commande (7) configurés de façon à commander la direction de l'air fixée par les moyens de modification de la direction de l'air (1) et par les moyens de détection de la température (3) ;
dans lequel les moyens de détection de la température de la surface (6) sont configurés de façon à détecter la température au niveau d'une surface qui présente sensiblement la même direction que la direction de soufflement de l'air sec ; et
dans lequel les moyens de commande (7) sont configurés de façon à identifier une plage dans laquelle les objets à sécher, tels que des vêtements humides, sont placés, sur la base de la température de la surface détectée par les moyens de détection de la température de la surface (6) à l'intérieur de la plage prédéterminée, à commander les moyens de modification de la direction de l'air (1) de façon à souffler l'air sec à partir des moyens de soufflement de l'air (2) vers la plage identifiée, et à commander les moyens de modification de la direction de l'air (1) de façon à ne pas souffler l'air sec en provenance des moyens de soufflement de l'air (2) vers une plage dans laquelle il a été détecté qu'aucun objet à sécher n'avait été placé ;
**caractérisé en ce que** les moyens de commande (7) sont configurés de façon à identifier, sur la base de la température de la surface détectée par les moyens de détection de la température de la surface (6), une plage qui est un agrégat d'une pluralité de zones dans lesquelles des objets à sécher, tels que des vêtements humides, sont placés dans la plage prédéterminée, et lorsque la gamme a été identifiée en une pluralité de nombres, à commander les moyens de modification de la direction de l'air (1) de façon à exécuter un soufflement qui commence de manière séquentielle avec une plage dans laquelle la température de la surface est la plus basse, ou dans une plage dans laquelle les zones sont les plus grandes en nombre.

2. Déshumidificateur selon la revendication 1, comprenant en outre :
des moyens opérationnels (8) configurés de façon à sélectionner un mode de séchage consistant à sécher des objets à sécher, tels que des vêtements humides ;
dans lequel les moyens de commande (7) sont configurés de façon à commander la direction de l'air fixée par les moyens de modification de la direction de l'air (1), par les moyens de détection de la température (3), par les moyens opérationnels (8) et similaires ; et
dans lequel, lors de la sélection du mode de séchage par les moyens opérationnels (8), les moyens de commande (7) sont configurés de façon à identifier une plage dans laquelle les objets à sécher, tels que des vêtements humides, sont placés, sur la base de la température de la surface détectée par les moyens de détection de la température de la surface (6) à l'intérieur de la plage prédéterminée, de façon à souffler l'air sec à partir des moyens de soufflement de l'air (2) vers la plage identifiée, et à ne pas souffler l'air sec en provenance des moyens de soufflement de l'air (2) vers une plage dans laquelle il a été détecté qu'aucun objet à sécher n'avait été placé.

3. Déshumidificateur selon la revendication 1 ou la revendication 2, dans lequel la plage prédéterminée est divisée en une pluralité de zones qui sont adjacentes les unes aux autres dans deux directions axiales qui se coupent à angle droit ; et
dans lequel la direction de la détection est modifiée de manière séquentielle de telle sorte que les températures depuis une partie extrémité vers l'autre partie extrémité de chacune des zones, soient détectées de manière individuelle par les moyens de commande (7), grâce à quoi les moyens de détection de la température de la surface (6) détectent une répartition des températures des surfaces de toutes les zones.

4. Déshumidificateur selon la revendication 1 ou la revendication 2, dans lequel la plage prédéterminée est divisée en une pluralité de zones qui sont adjacentes les unes aux autres dans la direction perpendiculaire et dans la direction horizontale ;
dans lequel les moyens de modification de la direction de l'air (1) sont configurés de façon à modifier la direction de soufflement de l'air sec au moins dans la direction verticale et dans la direction horizontale ; et
dans lequel les moyens de détection de la température de la surface (6) sont tels que la direction de ceux-ci soit commandée par les moyens de commande (7) de telle sorte que la surface de détection de la température fasse face à la direction de soufflement en réponse à la direction de soufflement des moyens de modification de la direction de l'air (1) qui change de manière séquentielle.

5. Déshumidificateur selon l'une quelconque des revendications 1 à 4, dans lequel, dans le cas où une plage dans laquelle la température de la surface est la plus basse et où une plage dans laquelle les zones sont les plus grandes en nombre diffèrent les unes des autres, les moyens de commande (7) sont configurés de façon à exécuter un soufflement qui commence de manière séquentielle avec la plage dans laquelle la température de la surface est la plus basse.

6. Déshumidificateur selon l'une quelconque des revendications 1 à 4, dans lequel, dans le cas où une plage dans laquelle la température de la surface est la plus basse et où une plage dans laquelle les zones sont les plus grandes en nombre diffèrent les unes des autres, les moyens de commande (7) sont configurés de façon à exécuter un soufflement qui commence de manière séquentielle avec la plage dans laquelle les zones sont les plus grandes en nombre.

7. Déshumidificateur selon la revendication 3 ou la revendication 4, dans lequel, dans le cas où une plage dans laquelle la température de surface est la plus basse, et où une plage dans laquelle les zones sont les plus grandes en nombre diffèrent les unes des autres, les moyens de commande (7) exécutent un soufflement qui commence de manière séquentielle par la plage dans laquelle la température de la surface est la plus basse si la différence entre le nombre de zones qui constituent la plage dans laquelle la température de la surface est la plus basse, et le nombre de zones qui constituent la plage dans laquelle les zones sont les plus grandes en nombre, est inférieure à un nombre prédéterminé, et exécutent un soufflement qui commence de manière séquentielle par la plage dans laquelle les zones sont les plus grandes en nombre si la différence du nombre de zones n'est pas inférieure au nombre prédéterminé.

8. Déshumidificateur selon l'une quelconque des revendications 1 à 7, dans lequel, dans le cas où il y a une plage pour laquelle il a été détecté, sur la base de la température de la surface détectée par les moyens de détection de la température de la surface (6), que les objets ont été déjà séchés, les moyens de commande (7) sont configurés de façon à ne pas exécuter de soufflement vers la plage.
